# EUROPEAN PATENT SPECIFICATION

(11) **EP 1 736 091 B1**
(45) Date of publication and mention of the grant of the patent: **31.03.2010**
(21) Application number: 06252414.5
(22) Date of filing: 06.05.2006
(51) Int. Cl.: A47L 13/50

(54) **Apparatus for wetting a cleaning tool**
Vorrichtung zur Durchfeuchtung von einem Reinigungselement
Appareil pour mouiller un outil de nettoyage

(30) Priority: 21.06.2005 GB 0512608; 07.02.2006 GB 0602341
(43) Date of publication of application: 27.12.2006
(73) Proprietor: Crisp Clean Services Limited, Langport, Somerset TA10 0PP (GB)
(72) Inventor: Frost, Paul Michael, Crisp Clean Services Ltd, Langport Somerset TA10 0PP (GB); Hudsmith, David Charles, Crisp Clean Services Ltd, Langport Somerset TA10 0PP (GB)
(74) Representative: Craske, Stephen Allan

(56) References cited:
- EP-A- 1 228 733
- DE-A1- 2 823 260
- DE-A1- 3 141 495
- US-A- 4 174 977
- US-A1- 2004 019 998
- US-A1- 2004 040 574

## Description

### TECHNICAL FIELD OF THE INVENTION

This invention relates to apparatus which may, for example, be incorporated in a mobile cleaning trolley for use in wetting a mop or similar cleaning tool.

### BACKGROUND

When using a mop or similar cleaning tool it is often desirable to apply a known amount of cleaning and/or disinfectant liquid to the mop. The use of insufficient liquid can result in poor cleaning, whilst the use of excessive amounts of liquid is wasteful and costly, and may leave high liquid residues on floors or other cleaned surfaces which could increase the risk of personal injury.

A known form of mop wetting apparatus uses a liquid dispensing device within the wetting chamber, which is operated by insertion of the mop head. However, movement of the mop within the wetting chamber can lead to inadvertent multiple dosing. Furthermore, since the internal volume of the wetting chamber is partially obstructed by the dispensing device, it is difficult to ensure that a dispensed volume of liquid is fully absorbed by the mop.

US 4 174 977 discloses apparatus having the features set forth in the precharacterising portion of Claim 1 hereof.

The present invention seeks to provide a new and inventive form of wetting apparatus which ensures that an accurately measured quantity of liquid is dispensed and absorbed by the tool on each occasion.

### SUMMARY OF THE INVENTION

The present invention proposes apparatus for wetting a cleaning tool which is characterised in that the metering chamber has a movable wall whereby the volume of liquid held within the metering chamber can be varied to control the quantity of liquid transferred to the wetting receptacle on each operation of the actuating member.

The liquid dispensing device may include a valve assembly which includes a dispensing valve member operable by the actuating member for controlling the supply of liquid from the metering chamber to the wetting receptacle, and a filling valve member operable by the actuating member for controlling the flow of liquid from the storage chamber to the metering chamber.

The actuating member may be moved by means of a trigger or other manual operating system. The actuating member is preferably arranged to close the filling valve member before opening the dispensing valve member, and to close the dispensing valve member before opening the filling valve member.

A first spring may act between the filling valve member and the actuating member, and the actuating member is arranged to move relative to the filling valve member against the action of the first spring. A second spring may act to close the dispensing valve member, and the actuating member is arranged to open the dispensing valve member against the action of the second spring.

The movable wall may be sealingly slidable within a parallel-walled section of the metering chamber wall. The movable wall is preferably operable by a metering control element which is movable to vary the volume of the metering chamber. The metering control element may be connected to the movable wall by a rigid connecting element. The metering control element preferably includes a drum portion which is slidably and rotatably located about the metering chamber wall. The drum portion may be located about a substantially cylindrical portion of the metering chamber wall.

### BRIEF DESCRIPTION OF THE DRAWINGS

The following description and the accompanying drawings referred to therein are included by way of non-limiting example in order to illustrate how the invention may be put into practice. In the drawings:
Figure 1 is a general view of a mobile cleaning trolley which includes apparatus in accordance with the invention for wetting a cleaning mop;
Figure 2 is a side view of a liquid dispensing device which is incorporated in the apparatus;
Figure 3 is a sectional view of the liquid dispensing device in a filling position;
Figure 4 is a further sectional view of the liquid dispensing device in at the start of a dispensing operation; and
Figure 5 is a third sectional view of the liquid dispensing device in a dispensing position.

### DETAILED DESCRIPTION OF THE DRAWINGS

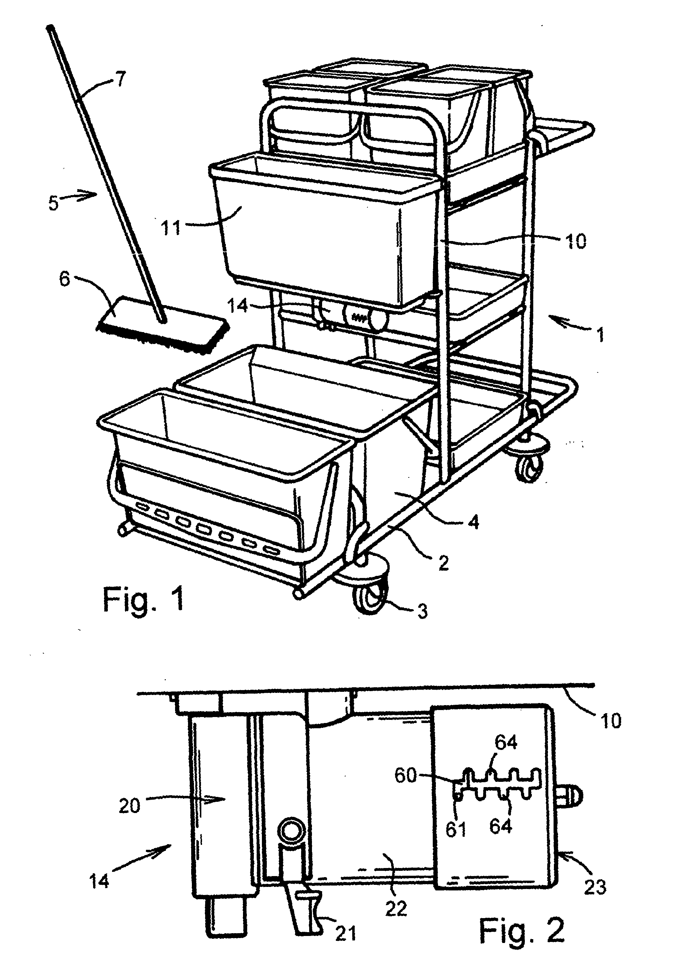

Referring firstly to **Fig. 1****,** a cleaning trolley 1 of known form has a generally horizontal base frame 2 which is supported on castor wheels 3. The trolley can be used to carry various items of cleaning equipment and is provided with a number of trays, buckets and similar open-topped receptacles. The base frame 2 supports a wetting bucket 4 into which a mop 5 may be inserted through its open top. The mop is also of a known kind, having a liquid-absorbent head 6 mounted on a metal frame which is secured to a handle 7. During cleaning, the mop head 6 may be inserted into the wetting bucket 4 to wet the head with a cleaning and/or disinfectant liquid. To ensure efficient and thorough cleaning, the present apparatus ensures that, on each insertion, the mop head 6 is wetted with an accurately measured quantity of liquid.

An upright support frame 10, secured to the base frame 2, carries a further bucket-like container 11 defining a liquid-storage chamber for holding a supply of cleaning and/or disinfectant liquid. The frame 10 supports the container 11 at a higher level than the wetting bucket 4 in a position which permits unimpeded movement of the mop head in and out of the bucket 4. A manually-operable liquid dispensing device 14 is mounted on the bottom of the container 11 for dispensing a measured quantity of liquid from the container 11 into the wetting bucket 4 upon each manual operation of the device 14.

The liquid-dispensing device 14 is shown in more detail in **Fig. 2****.** The device is fixed to the base of the container 11 and includes a metering valve 20, which is directly manually-operable by means of a trigger 21, and a metering chamber 22 provided with a control knob 23. It is also possible for the metering valve 20 to be operated by other manual means, e.g. by means of a handle or foot pedal arranged to operate the valve remotely via a cable or linkage system.

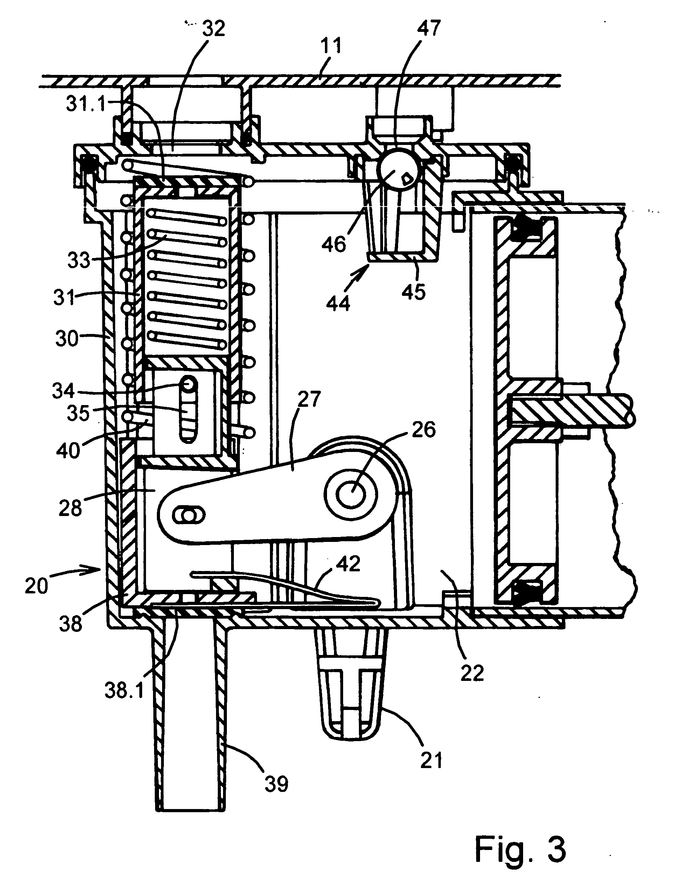

The rest condition of the liquid-dispensing device 14 is shown in the internal view of **Fig. 3****.** The trigger 21 is angularly movable about a pivot pin 26 and is rigidly fixed to a perpendicular operating arm 27 which is arranged to operate the metering valve 20 by axially moving an actuating shuttle 28 to slide vertically within a valve housing 30. The upper end of the shuttle 28 is slidably engaged within a cup-shaped filling valve member 31 carrying a sealing disc 31.1 which co-operates with an inlet orifice 32 through which liquid may pass from the container 11 into the metering chamber 22. A first compression spring 33 located within the valve member 31 urges the valve member away from the shuttle 28 by an amount which is limited by a pin 34 located within an axial slot 35 in the shuttle 28. The lower end of the shuttle 28 is slidably located within a hollow dispensing valve member 38 carrying a sealing disc 38.1 which co-operates with an outlet orifice formed within an outlet spout 39 through which liquid leaves the metering chamber 22. A second spring 40, located about the filling valve member 31, acts against the top of the housing 30 to urge the dispensing valve member 38 downwardly so that the sealing disc 38.1 normally sealingly closes the spout 39. A third, relatively weak leaf spring 42 within the metering chamber 22 acts between the shuttle 28 and the dispensing valve member 38 so that the shuttle 28 is biased downwards into contact with the lower end of the hollow valve member 38. In this condition, the shuttle 28 holds the filling valve member 31 clear of the inlet orifice 32, allowing the metering chamber 22 to fill with liquid from the container 11.

An air valve 44 is mounted within the uppermost part of the metering chamber 22. The valve comprises a cage 45 which contains a float valve element 46, arranged to co-operate with an air inlet port 47. The element 46 is free to move up-and-down within the cage 45 so that as the chamber fills with liquid air is expelled from the chamber 22 through the port 47. However, when the chamber 22 becomes substantially filled with liquid the valve element is carried upwards by the liquid and is urged into sealing engagement with the port 47, thereby preventing leakage of liquid through the air valve.

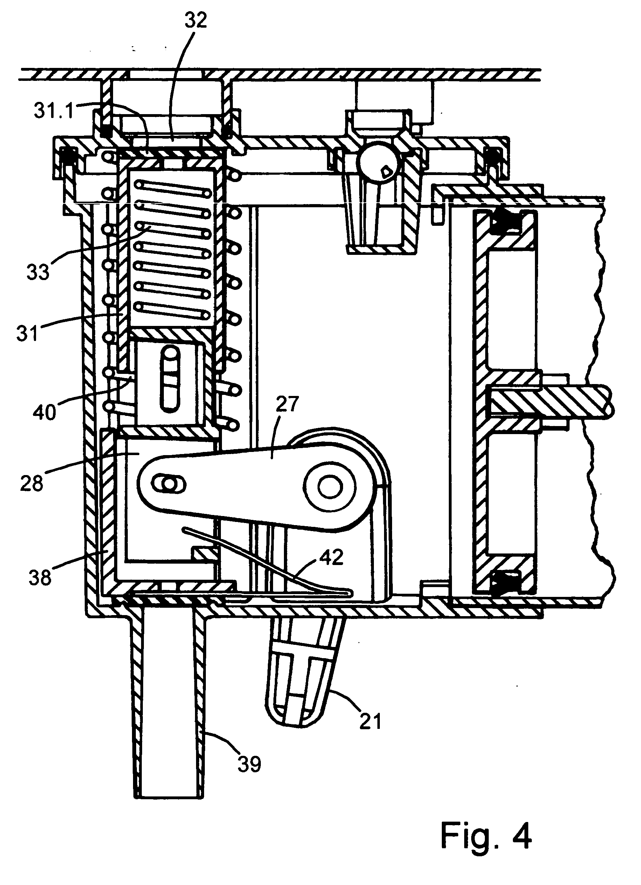

At the commencement of a dispensing operation the trigger 21 is moved to the left, as viewed in the drawings, e.g. by means of an operators finger. This initial condition is shown in **Fig. 4****.** The arm 27 lifts the shuttle 28 which slides upwardly within the dispensing valve member 38, against the action of the leaf spring 42, so that the outlet from the chamber 22 remains closed due to the relatively strong spring 40. The spring 33 continues to urge the filling valve member 31 away from the shuttle 28 so that the member 31 is carried upwards to close the inlet orifice 32.

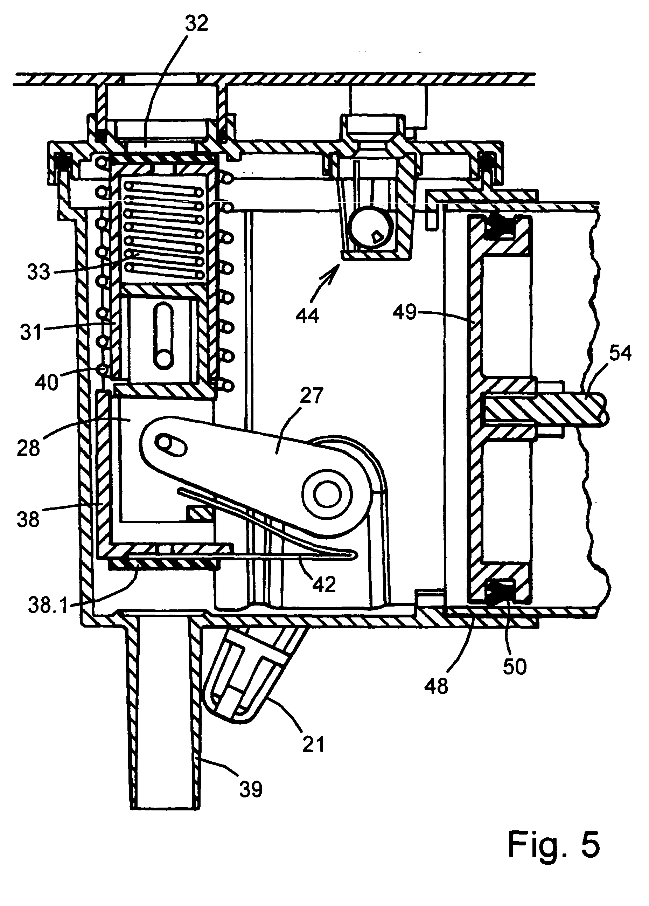

As the trigger continues moving towards the position shown in **Fig. 5****,** the shuttle 28 slides upwardly within the valve member 31, compressing the spring 33, The shuttle then engages the dispensing valve member 38, lifting the valve member 38 against the second spring 40 to release liquid from the metering chamber 22 via spout 39. As soon as this occurs the float valve 44 opens to admit air into the metering chamber 22, ensuring that the chamber quickly empties of liquid via the spout 39.

Upon releasing the trigger 21 the spring 33 pushes the shuttle 28 downwardly, allowing the valve member 38 to move under the action of spring 40 to close the dispensing spout by means of the sealing disc 38.1. The leaf spring 42 ensures that the shuttle returns to its lowermost position within the valve member 38, carrying the filling valve member 31 away from the inlet orifice 32 and thus allowing the chamber 22 to re-fill with liquid.

The arrangement of the metering valve 20, using the independently acting springs 33, 40 and 42, in combination with the float valve 44, ensures that:
- The filling member closes the inlet from the liquid container 11 before dispensing of liquid commences, thereby ensuring that an accurately metered amount of liquid is dispensed.
- A certain amount of movement of the trigger must take place before dispensing commences, thereby avoiding accidental dispensing of liquid.
- Closure of the filling member and opening of the dispensing member occur within a relatively small movement range of the trigger, so that the risk of partial dispensing is reduced.
- Dispensing of liquid occurs rapidly so that there is a low risk of the trigger being released before the required amount of liquid is released.
- When the trigger is released, the dispensing spout is fully closed before filling of the metering chamber re-commences, avoiding leakage of additional liquid into the wetting bucket.

At least part of the wall 48 of metering chamber 22 is generally cylindrical and is disposed substantially perpendicular to the axis of the metering valve 20. The opposite end of the metering chamber 22 is open to receive a piston 49, which is sealed by a ring seal 50. The control knob 23 is generally cup-shaped and is rotatably and slidably received over the chamber wall 48, being operably connected with the piston 49 by means of a co-axial rod 54. Axial movement of the knob 23 thus moves the piston 49 to vary the internal fluid-holding volume of the chamber 22.

In one form of the apparatus the internal volume of the chamber 22 may be determined by a scale which is marked on the chamber wall. The volume is read from the scale against an indicator region of knob 23. Alternatively, the chamber wall 48 may be transparent allowing the internal volume to be read from the scale against the position of the piston 49.

Referring back to **Fig. 2****,** an arrangement for positively determining the internal volume of the chamber is disclosed. The knob 23 contains an axial slot 60 which receives a stop pin 61, fixed on the chamber wall 48, to determine the axial sliding limits of the piston 49. Positive metering volumes are defined by side branches 64 which alternate on opposite sides of the slot 60 to receive the pin 61 upon rotational movement of the knob 23.

The apparatus thus allows the dispensing of known, accurately metered quantities of liquid which can be fully absorbed by the mop within the unimpeded wetting chamber of the bucket 4.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. Apparatus for wetting a cleaning tool, which includes an open-topped wetting receptacle (4) for receiving a cleaning tool (5) through said open top,
- a liquid-storage chamber (11) disposed at a higher level than the wetting receptacle, and
- a manually operable liquid dispensing device (14) for dispensing a measured quantity of liquid from the liquid-storage chamber into the wetting receptacle upon each manual operation thereof, said liquid dispensing device including a metering chamber (22), an actuating member (28), and a valve assembly (31, 38) operable by the actuating member for controlling the supply of liquid from the metering chamber to the wetting receptacle and controlling the flow of liquid from the liquid-storage chamber to the metering chamber,
***characterised in that***
the metering chamber (22) has a movable wall (49) whereby the volume of liquid held within the metering chamber can be varied to control the quantity of liquid transferred to the wetting receptacle on each operation of the actuating member.

2. Apparatus according to Claim 1 in which the valve assembly (31, 38) includes a dispensing valve member (38) for controlling the supply of liquid from the metering chamber to the wetting receptacle, and a separate filling valve member (31) for controlling the flow of liquid from the liquid-storage chamber to the metering chamber.

3. Apparatus according to Claim 1 or 2 in which the actuating member (28) is manually movable by means of a trigger (21).

4. Apparatus according to Claim 2 or 3 in which the actuating member (28) is arranged to close the filling valve member (31) before opening the dispensing valve member (38), and to close the dispensing valve member before opening the filling valve member.

5. Apparatus according to Claim 2, 3 or 4 in which a first spring (33) acts between the filling valve member (31) and the actuating member (28), and the actuating member is arranged to move towards the filling valve member against the action of the first spring.

6. Apparatus according to any of Claims 2 to 5 in which a second spring (40) acts to close the dispensing valve member (38), and the actuating member (28) is arranged to open the dispensing valve member against the action of the second spring.

7. Apparatus according to Claim 6 in which the liquid dispensing device includes a valve housing (30) and the second spring (40) acts against a fixed part of the valve housing.

8. Apparatus according to any of Claims 2 to 7 in which a third spring (42) acts between the actuating member (28) and the dispensing valve member (38), and the actuating member is arranged to move away from the dispensing valve member against the action of the third spring.

9. Apparatus according to any of Claims 2 to 8 in which the actuating member (28) is disposed between the filling valve member (31) and the dispensing valve member (38).

10. Apparatus according to Claim 9 in which the actuating member (28) is at least partly received within the filling valve member (31) and the dispensing valve member (38).

11. Apparatus according to any of Claims 2 to 10 in which the liquid dispensing device includes a vent valve (44) which admits air to the metering chamber during emptying thereof.

12. Apparatus according to Claim 11 in which the vent valve (44) allows air to leave the metering chamber during filling thereof.

13. Apparatus according to Claim 11 or 12 in which the vent valve includes a float member (46) which closes the vent valve when the metering chamber is substantially filled with liquid.

14. Apparatus according to any preceding claim in which the movable wall (49) is sealingly slidable within a parallel-walled section (48) of the metering chamber wall.

15. Apparatus according to Claim 14 in which the movable wall (49) is operable by a metering control element (23) which is movable to vary the volume of the metering chamber.

16. Apparatus according to Claim 15 in which the metering control element (23) is connected to the movable wall (49) by a rigid connecting element (54).

17. Apparatus according to Claim 15 or 16 in which the metering control element (23) includes a drum portion which is slidably and rotatably located about the metering chamber wall (48).

18. Apparatus according to Claim 17 in which the drum portion is located about a substantially cylindrical portion of the metering chamber wall.

## Patentansprüche

1. Vorrichtung zum Befeuchten eines Reinigungswerkzeugs, die einen Befeuchtungsbehälter (4) mit offener Oberseite zum Aufnehmen eines Reinigungswerkzeugs (5) durch die offene Oberseite,
- eine Flüssigkeitsspeicherkammer (11), die in einer größeren Höhe als der Befeuchtungsbehälter angeordnet ist, und
- eine von Hand bedienbare Flüssigkeitsabgabevorrichtung (14) zum Abgeben einer abgemessenen Menge von Flüssigkeit aus der Flüssigkeitsspeicherkammer in den Befeuchtungsbehälter bei jeder Betätigung der Flüssigkeitsabgabevorrichtung von Hand enthält, wobei die Flüssigkeitsabgabevorrichtung eine Dosierkammer (22), ein Betätigungselement (28) und eine Ventilanordnung (31, 38) enthält, die durch das Betätigungselement betrieben werden kann, um die Zufuhr von Flüssigkeit von der Dosierkammer zu dem Befeuchtungsbehälter zu steuern und um den Strom von Flüssigkeit aus der Flüssigkeitsspeicherkammer zu der Dosierkammer zu steuern,
**dadurch gekennzeichnet, dass**
die Dosierkammer (22) eine bewegliche Wand (49) hat, wodurch das Flüssigkeitsvolumen, das innerhalb der Dosierkammer gehalten wird, verändert werden kann, um die Menge an Flüssigkeit zu steuern, die bei jeder Betätigung des Betätigungselements zu dem Befeuchtungsbehälter transportiert wird.

2. Vorrichtung nach Anspruch 1, bei der die Ventilanordnung (31, 38) ein Abgabeventilelement (38) zum Steuern der Zufuhr von Flüssigkeit von der Dosierkammer zu dem Befeuchtungsbehälter und ein separates Füllventilelement (31) zum Steuern des Stroms von Flüssigkeit von der Flüssigkeitsspeicherkammer zu der Dosierkammer enthält.

3. Vorrichtung nach Anspruch 1 oder 2, bei der das Betätigungselement (28) von Hand mit Hilfe eines Auslösers (21) bewegt werden kann.

4. Vorrichtung nach Anspruch 2 oder 3, bei der das Betätigungselement (28) angeordnet ist, um das Füllventilelement (31) zu schließen, bevor das Abgabeventilelement (38) geöffnet wird, und um das Abgabeventilelement zu schließen, bevor das Füllventilelement geöffnet wird.

5. Vorrichtung nach Anspruch 2, 3 oder 4, bei der eine erste Feder (33) zwischen dem Füllventilelement (31) und dem Betätigungselement (28) wirkt und das Betätigungselement angeordnet ist, um sich gegen die Wirkung der ersten Feder in Richtung auf das Füllventilelement zu bewegen.

6. Vorrichtung nach einem der Ansprüche 2 bis 5, bei der eine zweite Feder (40) wirkt, um das Abgabeventilelement (38) zu schließen, und das Betätigungselement (28) angeordnet ist, um das Abgabeventilelement gegen die Wirkung der zweiten Feder zu öffnen.

7. Vorrichtung nach Anspruch 6, bei der die Flüssigkeitsabgabevorrichtung ein Ventilgehäuse (30) enthält und die zweite Feder (40) gegen einen feststehenden Teil des Ventilgehäuses wirkt.

8. Vorrichtung nach einem der Ansprüche 2 bis 7, bei der eine dritte Feder (42) zwischen dem Betätigungselement (28) und dem Abgabeventilelement (38) wirkt und das Betätigungselement angeordnet ist, um sich gegen die Wirkung der dritten Feder von dem Abgabeventilelement weg zu bewegen.

9. Vorrichtung nach einem der Ansprüche 2 bis 8, bei der das Betätigungselement (28) zwischen dem Füllventilelement (31) und dem Abgabeventilelement (38) angeordnet ist.

10. Vorrichtung nach Anspruch 9, bei der das Betätigungselement (28) zumindest teilweise in dem Füllventilelement (31) und dem Abgabeventilelement (38) aufgenommen ist.

11. Vorrichtung nach einem der Ansprüche 2 bis 10, bei der die Flüssigkeitsabgabevorrichtung ein Be- und Entlüftungsventil (44) enthält, das während einer Entleerung der Dosierkammer Luft in diese einlässt.

12. Vorrichtung nach Anspruch 11, bei der das Be- und Entlüftungsventil (44) ermöglicht, dass Luft die Dosierkammer während einer Befüllung von ihr verlässt.

13. Vorrichtung nach Anspruch 11 oder 12, bei der das Be- und Entlüftungsventil ein Schwimmelement (46) enthält, das das Be- und Entlüftungsventil schließt, wenn die Dosierkammer im Wesentlichen mit Flüssigkeit gefüllt ist.

14. Vorrichtung nach einem der vorhergehenden Ansprüche, bei der die bewegliche Wand (49) dichtend innerhalb eines parallelwandigen Abschnittes (48) der Dosierkammerwandung verschiebbar ist.

15. Vorrichtung nach Anspruch 14, bei der die bewegliche Wand (49) durch ein Dosiersteuerelement (23) betätigt werden kann, das bewegbar ist, um das Volumen der Dosierkammer zu verändern.

16. Vorrichtung nach Anspruch 15, bei der das Dosiersteuerelement (23) mit der beweglichen Wand (49) durch ein starres Verbindungselement (54) verbunden ist.

17. Vorrichtung nach Anspruch 15 oder 16, bei der das Dosiersteuerelement (23) einen Trommelabschnitt enthält, der verschiebbar und drehbar um die Dosierkammerwandung (48) angeordnet ist.

18. Vorrichtung nach Anspruch 17, bei der der Trommelabschnitt um einen im Wesentlichen zylindrischen Abschnitt der Dosierkammerwandung angeordnet ist.

## Revendications

1. Appareil pour mouiller un outil de nettoyage, qui comprend un récipient de mouillage à partie supérieure ouverte (4) pour recevoir un outil de nettoyage (5) à travers ladite partie supérieure ouverte,
- une chambre de stockage de liquide (11) disposée à un niveau plus élevé que le récipient de mouillage, et
- un dispositif de distribution de liquide pouvant être actionné manuellement (14) pour distribuer une quantité mesurée de liquide à partir de la chambre de stockage de liquide dans le récipient de mouillage à la suite de chaque actionnement manuel de celui-ci, ledit dispositif de distribution de liquide comprenant une chambre de dosage (22), un élément d'actionnement (28), et un ensemble soupape (31, 38) pouvant être actionné par l'élément d'actionnement pour commander la distribution de liquide de la chambre de dosage au récipient de mouillage et commander l'écoulement de liquide de la chambre de stockage de liquide à la chambre de dosage,
***caractérisé par le fait que***
la chambre de dosage (22) a une paroi mobile (49) par laquelle le volume de liquide contenu à l'intérieur de la chambre de dosage peut être amené à varier pour commander la quantité de liquide transférée au récipient de mouillage à la suite de chaque actionnement de l'élément d'actionnement.

2. Appareil selon la revendication 1, dans lequel l'ensemble soupape (31, 38) comprend un élément de soupape de distribution (38) pour commander la distribution de liquide de la chambre de dosage au récipient de mouillage, et un élément de soupape de remplissage séparé (31) pour commander l'écoulement de liquide de la chambre de stockage de liquide à la chambre de dosage.

3. Appareil selon la revendication 1 ou 2, dans lequel l'élément d'actionnement (28) peut être déplacé manuellement au moyen d'une gâchette (21).

4. Appareil selon la revendication 2 ou 3, dans lequel l'élément d'actionnement (28) est agencé pour fermer l'élément de soupape de remplissage (31) avant l'ouverture de l'élément de soupape de distribution (38), et pour fermer l'élément de soupape de distribution avant l'ouverture de l'élément de soupape de remplissage.

5. Appareil selon la revendication 2, 3 ou 4, dans lequel un premier ressort (33) agit entre l'élément de soupape de remplissage (31) et l'élément d'actionnement (28), et l'élément d'actionnement (28) est agencé pour se déplacer vers l'élément de soupape de remplissage à l'encontre de l'action du premier ressort.

6. Appareil selon l'une quelconque des revendications 2 à 5, dans lequel un deuxième ressort (40) agit pour fermer l'élément de soupape de distribution (38), et l'élément d'actionnement (28) est agencé pour ouvrir l'élément de soupape de distribution à l'encontre de l'action du deuxième ressort.

7. Appareil selon la revendication 6, dans lequel le dispositif de distribution de liquide comprend un boîtier de soupape (30) et le deuxième ressort (40) agit contre une partie fixe du boîtier de soupape (30).

8. Appareil selon l'une quelconque des revendications 2 à 7, dans lequel un troisième ressort (42) agit entre l'élément d'actionnement (28) et l'élément de soupape de distribution (38), et l'élément d'actionnement est agencé pour se déplacer à l'écart de l'élément de soupape de distribution à l'encontre de l'action du troisième ressort.

9. Appareil selon l'une quelconque des revendications 2 à 8, dans lequel l'élément d'actionnement (28) est disposé entre l'élément de soupape de remplissage (31) et l'élément de soupape de distribution (38).

10. Appareil selon la revendication 9, dans lequel l'élément d'actionnement (28) est au moins partiellement reçu à l'intérieur de l'élément de soupape de remplissage (31) et de l'élément de soupape de distribution (38).

11. Appareil selon l'une quelconque des revendications 2 à 10, dans lequel le dispositif de distribution de liquide comprend une soupape de mise à l'air libre (44) qui fait entrer de l'air dans la chambre de dosage lors de la vidange de celle-ci.

12. Appareil selon la revendication 11, dans lequel la soupape de mise à l'air libre (44) permet à de l'air de quitter la chambre de dosage lors du remplissage de celle-ci.

13. Appareil selon la revendication 11 ou 12, dans lequel la soupape de mise à l'air libre comprend un élément flotteur (46) qui ferme la soupape de mise à l'air libre lorsque la chambre de dosage est sensiblement remplie de liquide.

14. Appareil selon l'une quelconque des revendications précédentes, dans lequel la paroi mobile (49) est coulissante de manière étanche à l'intérieur d'une section à parois parallèles (48) de la paroi de chambre de dosage.

15. Appareil selon la revendication 14, dans lequel la paroi mobile (49) est apte à être actionnée par un élément de commande de dosage (23) qui est mobile pour faire varier le volume de la chambre de dosage.

16. Appareil selon la revendication 15, dans lequel l'élément de commande de dosage (23) est relié à la paroi mobile (49) à l'aide d'un élément de liaison rigide (54).

17. Appareil selon la revendication 15 ou 16, dans lequel l'élément de commande de dosage (23) comprend une partie tambour qui positionnée de manière coulissante et rotative autour de la paroi de chambre de dosage (48).

18. Appareil selon la revendication 17, dans lequel la partie tambour se situe autour d'une partie sensiblement cylindrique de la paroi de chambre de dosage.
